# EUROPEAN PATENT APPLICATION

(11) **EP 1 238 825 A1**
(43) Date of publication of application: **11.09.2002**
(21) Application number: 01105901.1
(22) Date of filing: 09.03.2001
(51) Int. Cl.: B60B 21/00, B60C 29/02

(54) **Combination of a valve and wheel rim for small diameter tire**

(71) Applicant: Liu, Yu-Ren, Yuan Lin Chen, Chang Hua Hsien (TW)
(72) Inventor: Liu, Yu-Ren, Yuan Lin Chen, Chang Hua Hsien (TW)
(74) Representative: Wehnert, Werner, Dipl.-Ing.

(57) **Abstract**

A wheel rim (30) includes a chamber (33) defined in a center of the rim' and a hole (32) is defined through a side of the rim. A rubber valve (40') is engaged with the hole of the rim and has a flange (400) which is engaged with an inner periphery of the chamber. An inflation needle (500) is allowed to penetrate through an air passage (43) in the rubber valve. A passage (34) is defined radially through the rim and communicates with the chamber and the hole so that air enters the tire via the passage.

## Description

The present invention relates to a hollow wheel rim which communicates with an interior of a tire, and a valve is connected to the rim. Air enters form the valve the into the tire via the hollow wheel rim. The valve is a rubber valve so as to be deformed and seal the hole in which it is engaged by pressure.

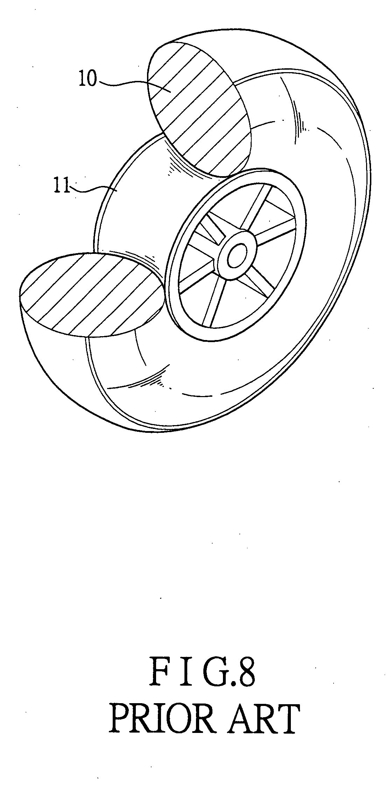

A conventional small diameter tire for scooters or strollers is shown in Fig. 8 and generally includes a solid tire 10 engaged with a wheel rim 11. The solid tire 10 is generally made from EVA or PU. Although PU has better flexibility than EVA tire and is easily steered, the material tends to be deformed permanently and therefore is disengaged from the ring 11. The PU tire also lacks of traction feature on the ground and tends to slip. It is too stiff for the EVA and tends to be worn out so that the EVA tire cannot be satisfied by the customers. Some small diameter tire has a tube and the position of the valve of the tube becomes a problem when cooperated with wheel rim. Generally, the wheel rims has different types of shapes so that it is difficult to let the valve of the tube cooperated with the wheel rim especially for the rim with 5 or 6 inches in diameter.

In accordance with one aspect of the present invention, there is provided a wheel rim comprising two annular walls so as to engage with a tire. A hole is defined through a side of the rim and communicates with a chamber defined in a center of the rim. A passage is defined radially through the rim and communicates with the chamber. A rubber valve is engaged with the hole of the rim and an air passage in the rubber valve is sealed by pressure when no inflation needle penetrates through the air passage.

The primary object of the present invention is to provide a wheel rim for small diameter tire and the wheel rim has a chamber which communicates with a passage communicating with the tire and a hole for receiving a valve.

The other object of the present invention is to provide rubber valve which has an air passage which is deformed and sealed by pressure when no inflation needle penetrates through the air passage.

These and further objects, features and advantages of the present invention will become more obvious from the following description when taken in connection with the accompanying drawings which show, for purposes of illustration only, several embodiments in accordance with the present invention.

### IN THE DRAWINGS

Fig. 1 is a cross sectional view to show a valve and a wheel rim of the present invention;
Fig. 2 is a cross sectional view to show the valve is engaged with the wheel rim of the present invention;
Fig. 3 is a cross sectional view to show a valve of a pump engaged with the valve on the wheel rim of the present invention;
Fig. 4 is a cross sectional view to show an elastomer valve of the present invention is connected to the wheel rim;
Fig. 5 is a cross sectional view to show the elastomer valve of the present invention is engaged with a conventional wheel rim;
Fig. 6 is a cross sectional view to show an inflation needle inserted in the air passage of the elastomer valve as shown in Fig. 5;
Fig. 7 is a cross sectional view to show another embodiment of the elastomer valve of the present invention, and
Fig. 8 is a perspective view to show a conventional solid tire and a conventional wheel rim.

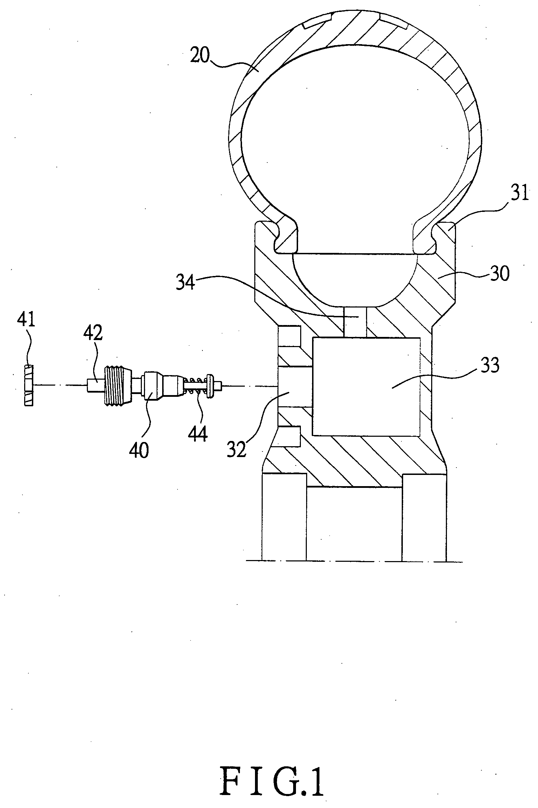

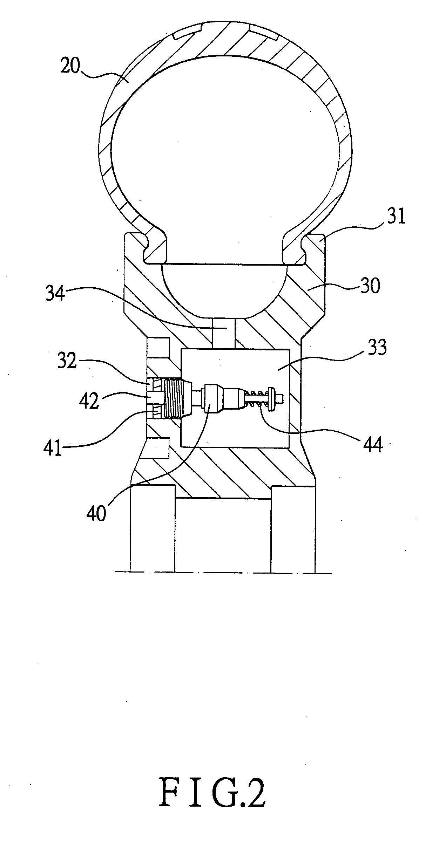

Referring to Figs. 1 and 2, the wheel rim 30 of the present invention comprises two annular walls 31 and two lips of a tire 20 is engaged between the two annular walls 31. A chamber 33 is defined in a center of the rim 30 and a hole 32 is defined through a side of the rim 30. A passage 34 is defined radially through the rim 30 and located in communication between the chamber 33 and an interior of the tire 20. The hole 32 communicates with the chamber 33. A valve 40 is engaged with the hole 32 of the rim 30.

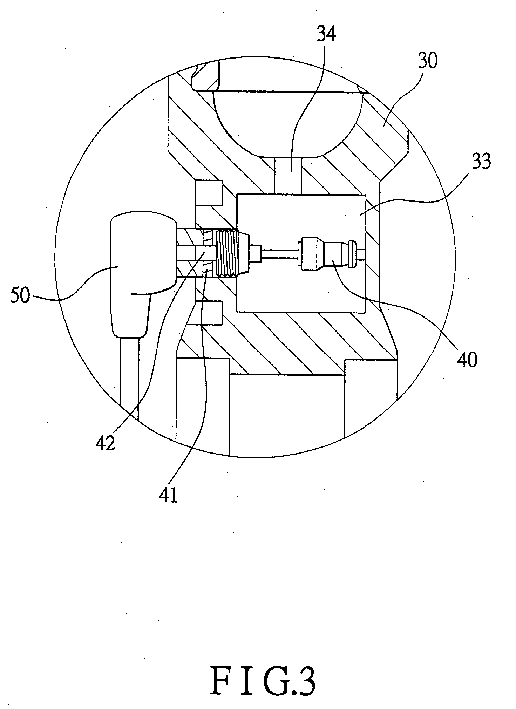

The valve 40 comprises a nut 41 mounted on an inlet tube 42 which is accessed from outside of the wheel rim 30. A spring 44 is mounted to the valve 40 so that when a valve of a pump 50 as shown in Fig. 3 is engaged with the inlet tube 42, the spring 44 is compressed and air is allowed to enter the chamber 33 and the interior of the tire 20. The wheel rim 30 is convenient to cooperate with tires with inner tube or tube-less tires.

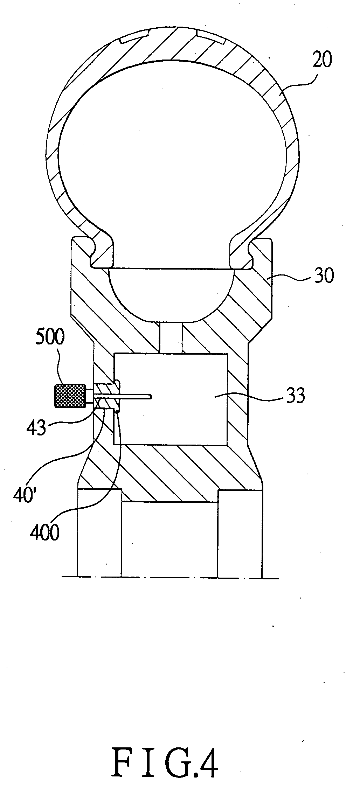

Figure 4 shows another embodiment of the valve which is an elastomer valve 40' and is made of deformable material. An air passage 43 is defined through the elastomer valve 40' and a flange 400 extends radially outward from the elastomer valve 40'. The flange 400 is engaged with an inner periphery of the chamber 33 of the wheel rim 30.

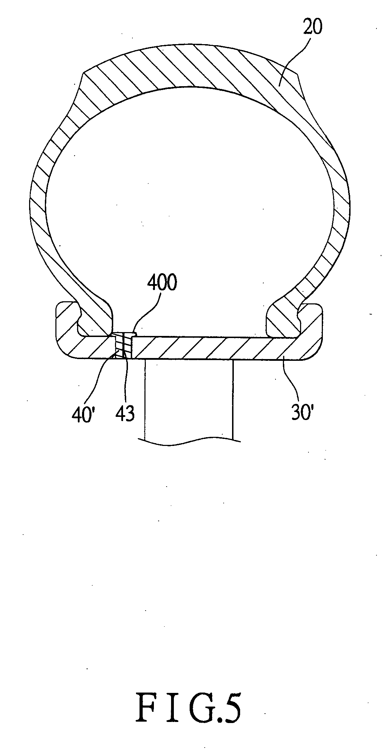

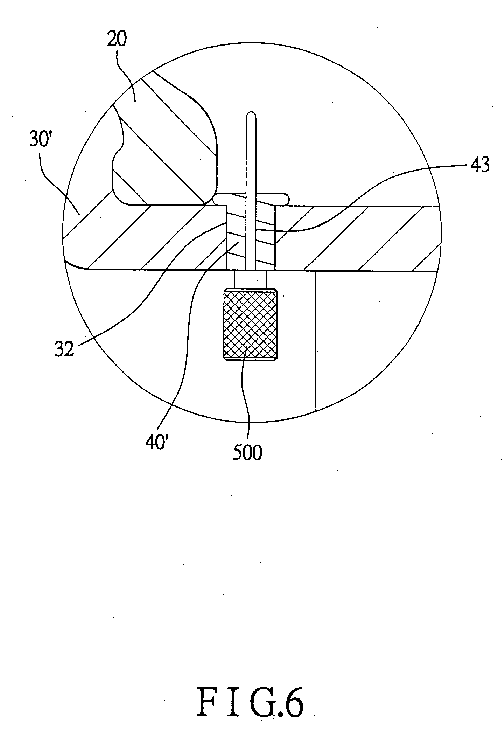

As shown in Fig. 5, the elastomer valve 40' is also able to connect with a conventional wheel rim 30'. It is to be noted that the air passage 43 is sealed by the deformation of the elastomer valve 40' because pressure in the tire 20 and nature of flixibility of the elastomer valve 40'. As shown in Fig. 6 an inflation needle 500 may penetrate through the air passage 43 in the elastomer valve 40' and sends air into the tire 20 on the wheel rim 30.

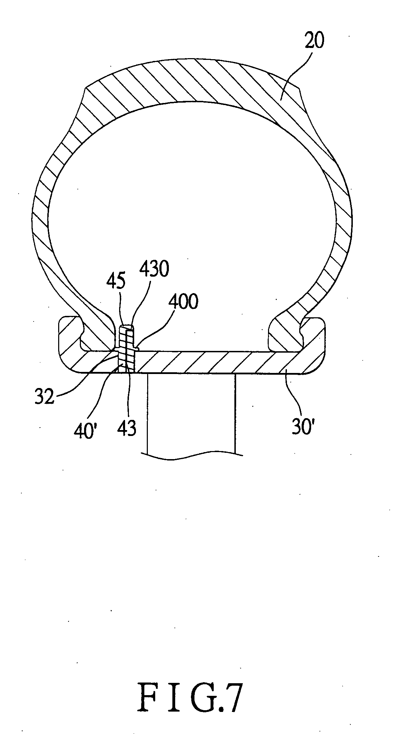

Figure 7 shows another embodiment of the elastomer valve 40' wherein an extension portion 45 extends from the flange 400 and another passage 430 is defined radially in the extension portion 45 of the elastomer valve 40' and communicates with the air passage 43.

While we have shown and described various embodiments in accordance with the present invention, it should be clear to those skilled in the art that further embodiments may be made without departing from the scope of the present invention.

## Claims

1. A combination of a valve and a wheel rim, said wheel rim comprising two annular walls so as to be adapted to engage with a tire, a hole defined through a side of said rim and a chamber defined in a center of said rim, a passage defined radially through said rim and said chamber respectively communicating with said hole and said passage, and
a valve engaged with said hole of said rim.

2. The combination a valve and a wheel rim as claimed in claim 1 wherein said valve is an elastomer valve and an air passage is defined through said elastomer valve, said air passage being sealed by pressure applied on said elastomer valve.

3. The combination a valve and a wheel rim as claimed in claim 1 further comprising a flange extending radially outward from said elastomer valve and engaged with an inner periphery of said wheel rim.
